# EUROPEAN PATENT APPLICATION

(11) **EP 4 517 608 A1**
(43) Date of publication of application: **05.03.2025**
(21) Application number: 23795412.8
(22) Date of filing: 25.04.2023
(51) Int. Cl.: G06N 20/00

(54) **MODEL INFORMATION ACQUISITION METHOD AND APPARATUS, MODEL INFORMATION SENDING METHOD AND APPARATUS, AND NODE AND STORAGE MEDIUM**

(30) Priority: 29.04.2022 CN 202210476336
(71) Applicant: Vivo Mobile Communication Co., Ltd., Dongguan, Guangdong 523863 (CN)
(72) Inventor: CHONG, Weiwei, Dongguan, Guangdong 523863 (CN)
(74) Representative: Conti, Marco
(86) International application number: PCT/CN2023/090590
(87) International publication number: WO 2023/207980

(57) **Abstract**

This application pertains to the field of communication technologies, and discloses a model information obtaining method and apparatus, a model information sending method and apparatus, a node, and a storage medium. The model information obtaining method in embodiments of this application includes: determining, by a model training function node, a federated learning FL server node; sending, by the model training function node, a first request message to the FL server node, where the first request message is used to trigger the FL server node to perform federated learning to obtain a target model; and receiving, by the model training function node, information about the target model that is sent by the FL server node.

## Description

### CROSS-REFERENCE TO RELATED APPLICATIONS

This application claims priority to Chinese Patent Application No. 202210476336.X, filed in China on April 29, 2022, which is incorporated herein by reference in its entirety.

### TECHNICAL FIELD

This application pertains to the field of communication technologies, and specifically, relates to a model information obtaining method and apparatus, a model information sending method and apparatus, a node, and a storage medium.

### BACKGROUND

Currently, some communication systems (for example, 5th-generation (5th-Generation, 5G) mobile communication) have introduced an artificial intelligence (Artificial Intelligence, AI) function. Specifically, a network service may be processed in a model. However, currently, a model can be obtained only through independent learning by a network node. Consequently, the network node may not be able to obtain a model through training in some scenarios (for example, training data is insufficient), leading to poor model training performance of the network node.

### SUMMARY

Embodiments of this application provide a model information obtaining method and apparatus, a model information sending method and apparatus, a node, and a storage medium, to address poor model training performance of a network node.

According to a first aspect, a model information obtaining method is provided, including:
determining, by a model training function node, a federated learning (Federated learning, FL) server node;
sending, by the model training function node, a first request message to the FL server node, where the first request message is used to trigger the FL server node to perform federated learning to obtain a target model; and
receiving, by the model training function node, information about the target model that is sent by the FL server node.

According to a second aspect, a model information sending method is provided, including:
receiving, by a federated learning FL server node, a first request message sent by a model training function node, where the first request message is used to trigger the FL server node to perform federated learning to obtain a target model;
performing, by the FL server node, federated learning with an FL client node based on the first request message to obtain the target model; and
sending, by the FL server node, information about the target model to the model training function node.

According to a third aspect, a model information obtaining apparatus is provided, including:
a first determining module, configured to determine a federated learning FL server node;
a first sending module, configured to send a first request message to the FL server node, where the first request message is used to trigger the FL server node to perform federated learning to obtain a target model; and
a receiving module, configured to receive information about the target model that is sent by the FL server node.

According to a fourth aspect, a model information sending apparatus is provided, including:
a receiving module, configured to receive a first request message sent by a model training function node, where the first request message is used to trigger a federated learning FL server node to perform federated learning to obtain a target model;
a learning module, configured to perform federated learning with an FL client node based on the first request message to obtain the target model; and
a sending module, configured to send information about the target model to the model training function node.

According to a fifth aspect, a model training function node is provided, including a processor and a memory, where the memory stores a program or instructions capable of running on the processor, and when the program or instructions are executed by the processor, the steps of the model information obtaining method provided in the embodiments of this application are implemented.

According to a sixth aspect, a model training function node is provided, including a processor and a communication interface. The processor or the communication interface is configured to determine an FL server node. The communication interface is configured to: send a first request message to the FL server node, where the first request message is used to trigger the FL server node to perform federated learning to obtain a target model; and receive information about the target model that is sent by the FL server node.

According to a seventh aspect, a server node is provided, including a processor and a memory, where the memory stores a program or instructions capable of running on the processor, and when the program or instructions are executed by the processor, the steps of the model information sending method provided in the embodiments of this application are implemented.

According to an eighth aspect, a server node is provided, including a processor and a communication interface. The communication interface is configured to receive a first request message sent by a model training function node, where the first request message is used to trigger a federated learning FL server node to perform federated learning to obtain a target model. The processor or the communication interface is configured to perform federated learning with an FL client node based on the first request message to obtain the target model. The communication interface is configured to send information about the target model to the model training function node.

According to a ninth aspect, a model information transmission system is provided, including a model training function node and a server node, where the model training function node may be configured to perform the steps of the model information obtaining method provided in the embodiments of this application, and the server node may be configured to perform the steps of the model information sending method provided in the embodiments of this application.

According to a tenth aspect, a readable storage medium is provided, where the readable storage medium stores a program or instructions, and when the program or instructions are executed by a processor, the steps of the model information obtaining method provided in the embodiments of this application are implemented, or the steps of the model information sending method provided in the embodiments of this application are implemented.

According to an eleventh aspect, a chip is provided, where the chip includes a processor and a communication interface, the communication interface is coupled to the processor, and the processor is configured to run a program or instructions to implement the model information obtaining method provided in the embodiments of this application or the model information sending method provided in the embodiments of this application.

According to a twelfth aspect, a computer program or program product is provided, where the computer program or program product is stored in a storage medium, and the computer program or program product is executed by at least one processor to implement the model information obtaining method provided in the embodiments of this application, or the computer program or program product is executed by at least one processor to implement the model information sending method provided in the embodiments of this application.

In the embodiments of this application, the model training function node determines the FL server node; the model training function node sends the first request message to the FL server node, where the first request message is used to trigger the FL server node to perform federated learning to obtain the target model; and the model training function node receives the information about the target model that is sent by the FL server node. In this way, the model training function node can obtain the information about the target model for federated learning, to improve model training performance of a network node.

### BRIEF DESCRIPTION OF DRAWINGS

FIG. 1 is a block diagram of a wireless communication system to which embodiments of this application are applicable;
FIG. 2 is a flowchart of a model information obtaining method according to an embodiment of this application;
FIG. 3 is a flowchart of a model information sending method according to an embodiment of this application;
FIG. 4 is a schematic diagram of a model information obtaining method according to an embodiment of this application;
FIG. 5 is a schematic diagram of another model information obtaining method according to an embodiment of this application;
FIG. 6 is a structural diagram of a model information obtaining apparatus according to an embodiment of this application;
FIG. 7 is a structural diagram of a model information sending apparatus according to an embodiment of this application;
FIG. 8 is a structural diagram of a communication device according to an embodiment of this application; and
FIG. 9 is a structural diagram of a network node according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and the claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not limit a quantity of objects. For example, there may be one or more first objects. In addition, in this specification and the claims, "and/or" represents at least one of connected objects, and the character "/" typically represents an "or" relationship between the associated objects.

It should be noted that technologies described in the embodiments of this application are not limited to a long term evolution (Long Term Evolution, LTE)/LTE-advanced (LTE-Advanced, LTE-A) system, and may be further used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the aforementioned systems and radio technologies as well as other systems and radio technologies. In the following descriptions, a new radio (New Radio, NR) system is described for an illustration purpose, and NR terms are used in most of the following descriptions. However, these technologies may also be applied to applications other than an NR system application, for example, a 6th generation (6th Generation, 6G) communication system.

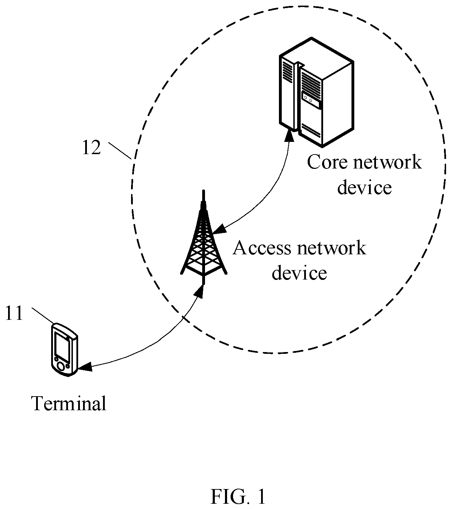

FIG. 1 is a block diagram of a wireless communication system to which embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart household (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, a smart ankle chain, a smart helmet, a smart joystick, or the like), a smart wristband, smart clothing, or the like. It should be noted that a specific type of the terminal 11 is not limited in the embodiments of this application.

The network-side device 12 may include an access network device and a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (NodeB, NB), an evolved NodeB (Evolved NodeB, eNB), an access point, a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmitting receiving point (Transmitting Receiving Point, TRP), or another appropriate term in the art. Provided that the same technical effect is achieved, the base station is not limited to a specific technical term. It should be noted that the base station in the NR system is used only as an example for description in the embodiments of this application, but a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), a network data analytics function (Network Data Analytics Function, NWDAF), and the like. It should be noted that the core network device in the NR system is used only as an example for description in the embodiments of this application, but a specific type of the core network device is not limited.

In the embodiments of this application, a model training function node may be a network node for generating a model and performing model training, and the model training function node may be a common model training function node (not an FL server node) or an FL client node. To be specific, that the model training function node is not an FL server node may be understood as that the model training function node cannot serve as an FL server node for a specific model training task (corresponding to a specific analytics identifier or a specific area of interest (Areas of Interest, AOI)), but may serve as an FL server node for another model training task (for example, corresponding to another analytics identifier or another AOI).

A model inference function node may be a network node for performing inference to generate prediction information, generate statistical information, perform data analytics, or the like.

In some embodiments, the model training function node may be a network element, a terminal, or a module with an AI model training function in a communication network, and the model inference function node is a network element, a terminal, or a module with a model inference function in the communication network. To be specific, certainly, the model training function node and the model inference function node may also be referred to as other names.

In the embodiments of this application, the model training function node and the model inference function node may be core-network network elements or internal modules of a core-network network element. For example, the NWDAF may include the model training function node and the model inference function node, the FL server node is a core-network network element with a federated learning server capability, and the FL client node may be another core-network network element or module that participates in federated learning. Alternatively, the model training function node and the model inference function node may be radio-access-network network elements or internal modules of a radio-access-network network element. To be specific, the model training function node and the model inference function node may be internal functions of a RAN. For example, the model training function node may be a RAN device with a model training function. Specifically, for example, the model training function node may be a base station device or a module that has a model training function but is not an FL server node, the FL server node is a base station device, a module, or operation, administration, and maintenance (Operation Administration and Maintenance, OAM) that has a federated learning server capability, and the FL client node may be another member base station device or module that participates in federated learning.

In addition, the model training function node and the model inference function node may alternatively be terminals or functions of a terminal. For example, the model training function node may be a terminal with a model training function. Specifically, for example, the model training function node may be a terminal that has a model training function but is not an FL server node, the FL server node is a terminal or an AF that has a federated learning server capability, and other FL client nodes may be other member terminals that participate in federated learning.

It should be noted that, in the embodiments of this application, the model training function node and the model inference function node may be separately deployed as different network element devices or jointly deployed on one network element device, for example, as two internal functional modules of a core-network network element, a radio-access-network network element, or a terminal. In this case, the core-network network element, the radio-access-network network element, or the terminal may provide both an AI model training function and a model inference function.

In the embodiments of this application, the FL server node is a network element that coordinates or hosts federated learning. For example, the FL server node may be an FL central network element or an FL coordinator network element, or may be a central model training function node for an FL operation. The FL server node may be specifically a core-network network element, a radio-access-network network element, a terminal, an application server, or another network element. The FL client node is a network element that participates in federated learning, and may be referred to as a network element that participates in an FL operation. The FL client node may be specifically a core-network network element, a radio-access-network network element, a terminal, an application server, or another network element.

In some embodiments, the model training function node may be a model training logical function (Model Training Logical Function, MTLF), the model inference function node may be an analytics logical function (Analytics Logical Function, AnLF), the FL server node may be an FL server, and the FL client node may be an FL client.

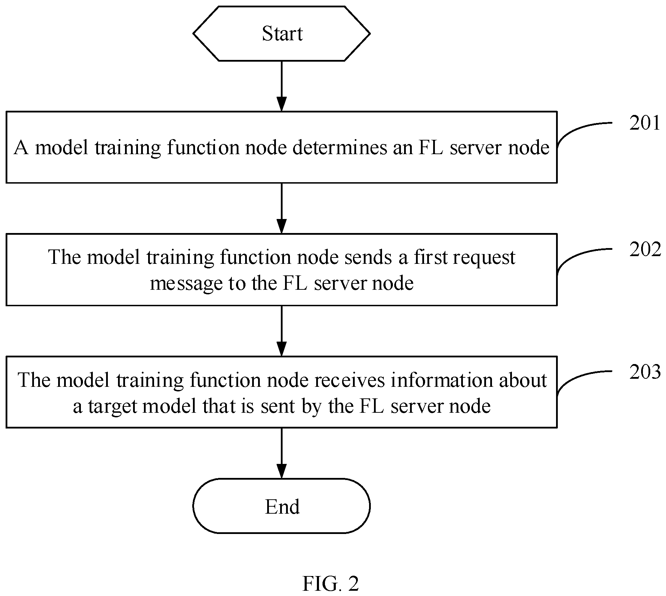

FIG. 2 is a flowchart of a model information obtaining method according to an embodiment of this application. As shown in FIG. 2, the method includes the following steps.

Step 201: A model training function node determines an FL server node.

The determining an FL server node may be that the model training function node queries another network node for the FL server node, or may be that the model training function node selects the FL server node based on pre-obtained configuration information.

Step 202: The model training function node sends a first request message to the FL server node, where the first request message is used to trigger the FL server node to perform federated learning to obtain a target model.

The first request message may request the FL server node to perform federated learning to obtain the target model through training. Specifically, an FL server may perform an FL operation with at least one FL client node. For example, the FL server performs an interactive iteration process of federated learning with at least one FL client node to obtain the target model. Because the target model is a model obtained through federated learning, the target model may also be referred to as a federated learning model.

Step 203: The model training function node receives information about the target model that is sent by the FL server node.

This step may be as follows: After the FL server node obtains the target model through federated learning, the FL server node sends the information about the target model to the model training function node.

The information about the target model may be information for determining the target model, for example, model file information of the target model, or download address information of a model file.

It should be noted that, in this embodiment of this application, the target model may be a model used for communication service processing in a communication system, for example, may be a model used for data analytics, or may be a model used for an inference task, or may be a model used for channel estimation, or may be a model used for information prediction.

In this embodiment of this application, the model training function node can obtain the information about the target model for federated learning through the foregoing steps, to improve model training performance of a network node and further resolve a problem that a target model cannot be obtained due to data privacy. For example, the model training function node needs to provide a target model for an AOI specified by a model inference function node. However, when the model training function node finds that all or some of training data in the AOI cannot be obtained due to a data silo problem, the model training function node triggers the FL server node to perform federated learning.

In an optional implementation, that a model training function node determines an FL server node includes:

The model training function node sends a node discovery request message to a network repository function network element, where the node discovery request message is used to request a network node that participates in federated learning training; and
the model training function node receives a response message sent by the network repository function network element, where the response message includes information about the FL server node.

The node discovery request message may be a network element discovery request (Nnrf_NFDiscovery_Request).

The network repository function network element may store information about one or more FL server nodes, so that the network repository function network element returns information about a corresponding FL server node to the model training function node after receiving the request message.

In this implementation, the information about the FL server node can be obtained from the network repository function network element.

It should be noted that, in some implementations, the information about the FL server node may alternatively not be obtained from the network repository function network element. For example, the information about the FL server node may be fixedly configured on the model training function node.

Optionally, the node discovery request message includes at least one of the following:
an analytics identifier (analytics ID), area of interest (area of interest, AOI) information, time of interest information, model description mode information, model shareability information, model performance information, model algorithm information, model training speed information, federated learning indication information, federated learning type information, FL server node type indication information, FL client node type indication information, first service information, and second service information.

The analytics identifier may be used to indicate that the network node requested by the request message needs to support a model training task corresponding to the analytics identifier.

The AOI information may be used to indicate that the network node requested by the request message can serve an area corresponding to the AOI information, where the area may be at least one tracking area (Tracking Area, TA), at least one cell (cell), or other areas.

The time of interest information may be used to indicate that the network node requested by the request message needs to support model training within a time period corresponding to the time of interest information.

The model description mode information may be used to indicate that the network node requested by the request message needs to support a model expression based on a model description mode corresponding to the model description mode information. The model description mode information may also be referred to as model description mode requirement information or model description mode expectation information. For example, the model description mode information may be specifically a model expression language represented by Open Neural Network Exchange (Open Neural Network Exchange, ONNX) or the like, or a model framework represented by TensorFlow, Pytorch, or the like.

The model shareability information may be used to indicate that the network node requested by the request message needs to be able to share a model with the model training function node. The model shareability information may also be referred to as model shareability requirement information or model shareability expectation information. Shareability means that interworking is possible, or shareability means that mutual understanding is possible, or shareability means that running is possible.

The model performance information may be used to indicate that the network node requested by the request message needs to provide a model that can meet the model performance information. The model performance information may also be referred to as model performance requirement information or model performance information expectation information. Performance may be accuracy or a mean absolute error (Mean Absolute Error, MAE) of a model or the like.

The model algorithm information may be used to indicate that the network node requested by the request message needs to support model training based on a model algorithm corresponding to the model algorithm information. The model algorithm information may also be referred to as model algorithm requirement information or model algorithm expectation information.

The model training speed information may be used to indicate that a model training speed of the network node requested by the request message needs to meet a model training speed indicated by the model training speed information. The model training speed information may also be referred to as model training speed requirement information or model training speed expectation information. A training speed may be expressed as time taken for model training to reach convergence or reach a specific performance threshold.

The federated learning indication information may be used to indicate that the network node requested by the request message needs to support federated learning.

The federated learning type information may be used to indicate that a federated learning type that the network node requested by the request message needs to support is at least one of the following:
a horizontal federated learning type and a vertical federated learning type.

The horizontal federated learning type may be learning and training performed by using different training data samples with a same feature point. The vertical federated learning type may be learning and training performed by using training data samples of a same training sample that have different feature points.

The FL server node type indication information may be used to indicate that the network node requested by the request message belongs to an FL server node type.

The FL client node type indication information may be used to indicate that the network node requested by the request message belongs to an FL client node type.

The first service information may be used to indicate that the network node requested by the request message needs to support a service of a federated learning server.

The second service information may be used to indicate that the network node requested by the request message needs to support a service of a federated learning member.

In this implementation, because the node discovery request message includes at least one of the foregoing information, the network repository function network element can return information about an FL server node that meets a corresponding condition to the model training function node, so that the FL server node can finally obtain, through federated learning, a target model that the model training function node requires, is satisfied with, or expects.

Optionally, the response message includes information about N network nodes, the N network nodes include the FL server node, and N is a positive integer.

Information about each network node includes at least one of the following:
a fully qualified domain name (Fully Qualified Domain Name, FQDN), identification information, and address information.

In this implementation, the FL server node is determined based on at least one of the FQDN, the identification information, and the address information.

In some implementations, the N network nodes further include an FL client node.

One or more FL client nodes included in the N network nodes may be FL client nodes that participate in current federated learning. The FL client nodes may be FL participants or FL members.

Because the response message further includes the FL client node, the model training function node can quickly determine the FL server node and the FL client node, and therefore can request, in a timely manner, the FL server node and the FL client node to perform federated learning, to improve efficiency of obtaining the target model.

Optionally, the information about each network node further includes:
type information, where the type information is used to indicate a type of a network node, and the type is one of an FL server node and an FL client node.

In this implementation, the type information may indicate whether a network node is an FL server node or an FL client node. Certainly, in this embodiment of this application, the type information may alternatively not be indicated. For example, the model training function node may identify, based on identification information of the network nodes, whether the network nodes are FL server nodes or FL client nodes. Alternatively, in a case that the response message includes the FL server node and the FL client node, information about the FL server node and information about the FL client node are sorted in the response message, so that the model training function node can identify the FL server node and the FL client node based on the sorting of the information.

In an optional implementation, the first request message includes at least one of the following:
federated learning indication information and a model identifier, where
the federated learning indication information is used to request the FL server node to trigger federated learning to obtain the target model; and
the model identifier is used to uniquely identify the target model.

The model identifier may be obtained by the model training function node. For example, the method further includes the following step: The model training function node obtains the model identifier. For example, the model training function node generates the model identifier or obtains the model identifier from a model identifier management network element.

In this implementation, because the first request message includes at least one of the federated learning indication information and the model identifier, the FL server node can determine to perform federated learning, to quickly respond to the request message. It should be noted that, in some implementations, the federated learning indication information and the model identifier may alternatively not be carried. For example, the model identifier may be obtained by the FL server node, and the FL server node performs federated learning by default after receiving the first request message.

In some implementations, the first request message may include at least one of the following:
an analytics identifier, time of interest information, model description mode information, model shareability information, model performance information, model algorithm information, model training speed information, first model filter information, first target information, and reporting information.

For the analytics identifier, the time of interest information, the model description mode information, the model shareability information, the model performance information, the model algorithm information, and the model training speed information, refer to corresponding descriptions in the foregoing implementations. Details are not described herein again.

The first model filter information may be used to indicate at least one of an area range, a time range, a slice range, and a data network name (Data Network Name, DNN) range of federated learning.

The first target information may be used to indicate that a target of federated learning is one of a single terminal, a plurality of terminals, or any terminal. For example, the first target information includes terminal information, for example, a terminal identifier (UE ID) or a terminal group identifier (UE group ID).

The reporting information may be used to indicate a reporting format and/or a reporting condition for sending the federated model.

In this implementation, the first request message includes at least one of the foregoing information, so that the FL server node can finally obtain, through federated learning, a target model that the model training function node requires, is satisfied with, or expects.

In an optional implementation, the first request message includes information about an FL client node that participates in federated learning.

The FL client node that participates in federated learning may be one or more FL client nodes, and the clients may or may not include the model training function node.

The information about the FL client node for federated learning may be obtained from the network repository function network element, or may be pre-configured on the model training function node. In this way, because the first request message includes the information about the FL client node that participates in federated learning, the FL server node can quickly perform federated learning with the FL client node, to improve efficiency of obtaining the target model.

In an optional implementation, the information about the target model includes at least one of the following information corresponding to the target model:
a model identifier, federated indication information, a model file, and address information of the model file.

The federated learning indication information is used to indicate that the target model is a model obtained through federated learning.

The model identifier is used to uniquely identify the target model.

The model file may include related file information of the target model, for example, include a network structure, a weight parameter, input/output data, and other files of the model.

The address information of the model file is address information for obtaining the target model, for example, a storage address for indicating the model file, or download address information of the model file.

It should be noted that, in this embodiment of this application, the information about the target model may not include the model identifier because the model training function node may obtain the identifier by itself, the information about the target model may not include the federated indication information because the model training function node may determine by default that the target model sent by the FL server node is a model obtained through federated learning, the information about the target model may not include the model file because the model training function node downloads the model file based on the address information, and the information about the target model may not include the address information of the model file because in some implementations, the model file may be stored at a pre-configured location after the model is trained, so that the model training function node downloads the model file from the location.

In some implementations, the information about the target model may alternatively include at least one of the following information corresponding to the target model:
an analytics identifier, second model filter information, and model validity information.

The analytics identifier may be used to indicate a task corresponding to the target model.

The second model filter information may be used to indicate at least one of an area range, a time range, a slice range, and a data network name (Data Network Name, DNN) range of the target model.

The model validity information may be used to indicate validity information of the model, such as time of validity and an area of validity.

In an optional implementation, the method further includes the following step:

The model training function node sends the information about the target model to the model inference function node.

In this implementation, the information about the target model may be actively sent to the model inference function node, or the information about the target model may be sent based on a request of the model inference function node.

For example, in the request-based sending mode, the model training function node receives a model request message sent by the model inference function node, where the model request message may include at least one of the following:
an analytics identifier, third model filter information, second target information, and time information.

The fourth sub-identifier may be used to indicate a data analytics task to which a model identifier requested by the model request message is specific.

The third model filter information may be used to indicate a condition that a model requested by the model request message needs to meet. For example, the condition may be an area of interest that the model needs to serve, single network slice selection assistance information (Single Network Slice Selection Assistance Information, S-NSSAI), or a DNN.

The second target information may be used to indicate a training target of the model requested by the model request message, where the training target may be a single terminal, a plurality of terminals, any terminal, or the like. For example, the second target information is terminal identifiers or a terminal group identifier of the terminals.

The time information is used to indicate at least one of the following: applicable time of the model requested by the model request message and reporting time of model information.

In this implementation, because the model training function node sends the information about the target model to the model inference function node, the model inference function node can use the target model to improve service performance of the model inference function node.

In an optional implementation, before the model training function node determines the FL server node, the method further includes the following step:

The model training function node determines that federated learning needs to be performed to obtain the target model.

The determining that federated learning needs to be performed to obtain the target model may be as follows: The model training function node cannot independently perform training to obtain the target model, and therefore determines that federated learning needs to be performed to obtain the target model. For example, that the model training function node determines that federated learning needs to be performed to obtain the target model includes:

In a case that the model training function node determines that all or some of training data for generating the target model is unable to be obtained, the model training function node determines that federated learning needs to be performed to obtain the target model.

That all or some of training data for generating the target model is unable to be obtained may be as follows: The model training function node cannot obtain all or some of the training data for generating the target model due to technical security, user privacy, or other causes. For example, the model training function node needs to provide a target model for an AOI specified by the model inference function node. However, when the model training function node finds that all or some of training data in the AOI cannot be obtained due to a data silo problem, the model training function node triggers the FL server node to perform federated learning. For another example, the model training function node needs to obtain models corresponding to some terminals, but the model training function node cannot obtain training data corresponding to the terminals due to data privacy issues. In this case, the training data corresponding to the terminals may be obtained through the FL server node, or federated learning is triggered to obtain a target model for the terminals.

In this implementation, in the case of determining that federated learning needs to be performed to obtain the target model, the information about the target model can be obtained through the FL server node, to improve model training performance of a network node. For example, the target model can be obtained in a case that the model training function node does not have sufficient training data for the target model, and the target model can be obtained in a case that the model training function node does not have sufficient training resources for the target model, to improve model training performance of a network node.

In this embodiment of this application, the model training function node determines the FL server node; the model training function node sends the first request message to the FL server node, where the first request message is used to trigger the FL server node to perform federated learning to obtain the target model; and the model training function node receives the information about the target model that is sent by the FL server node. In this way, the model training function node can obtain the information about the target model for federated learning, to improve model training performance of a network node.

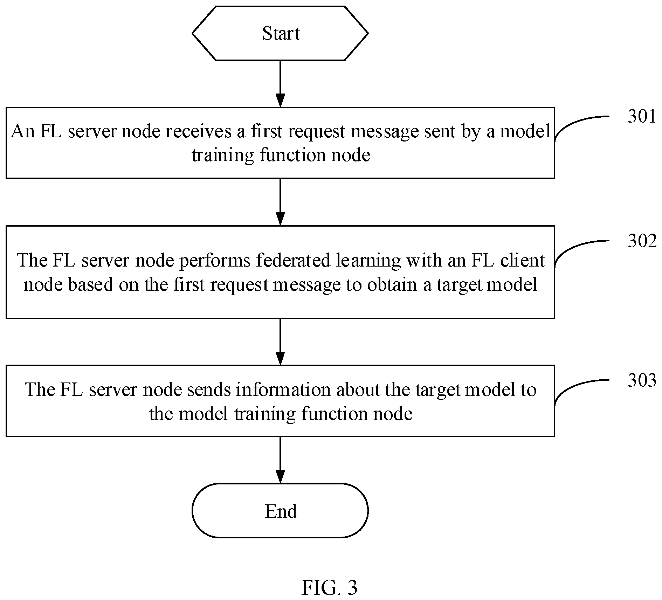

FIG. 3 is a flowchart of a model information sending method according to an embodiment of this application. As shown in FIG. 3, the method includes the following steps.

Step 301: An FL server node receives a first request message sent by a model training function node, where the first request message is used to trigger the FL server node to perform federated learning to obtain a target model.

Step 302: The FL server node performs federated learning with an FL client node based on the first request message to obtain the target model.

That the FL server node performs federated learning with an FL client node based on the first request message may be that the first request message triggers the FL server node to perform an FL operation with the FL client node. Specifically, the FL server node may perform an interactive iteration process of federated learning with the FL client node to obtain the target model through training.

Step 303: The FL server node sends information about the target model to the model training function node.

Optionally, the first request message includes at least one of the following:
federated learning indication information and a model identifier, where
the federated learning indication information is used to request the FL server node to trigger federated learning to obtain the target model; and
the model identifier is used to uniquely identify the target model.

In some implementations, the first request message may include at least one of the following:
an analytics identifier, time of interest information, model description mode information, model shareability information, model performance information, model algorithm information, model training speed information, first model filter information, first target information, and reporting information.

Optionally, the first request message includes information about an FL client node that participates in federated learning.

Optionally, the method further includes the following step:
The FL server node determines an FL client node that participates in federated learning.

That the FL server node determines an FL client node that participates in federated learning may be that the FL server node queries the FL client node that participates in federated learning from a network repository function network element, or may be that the FL server node determines, based on pre-configured information, the FL client node that participates in federated learning.

Optionally, that the FL server node determines an FL client node that participates in federated learning includes:
The FL server node sends a node discovery request message to a network repository function network element, where the node discovery request message is used to request an FL client node that participates in federated learning; and
the FL server node receives a response message sent by the network repository function network element, where the response message includes information about an FL client node that participates in federated learning.

Optionally, the information about the federated model includes at least one of the following information corresponding to the target model:
a model identifier, federated indication information, a model file, and address information of the model file, where
the federated learning indication information is used to indicate that the target model is a model obtained through federated learning; and
the model identifier is used to uniquely identify the target model.

In some implementations, the information about the target model may alternatively include at least one of the following information corresponding to the target model:
an analytics identifier, second model filter information, and model validity information.

Optionally, the model identifier is obtained by the model training function node for the target model.

Optionally, the method further includes the following step:
The FL server node obtains the model identifier for the target model.

The model identifier obtained by the FL server node for the target model may be generated by the FL server node or obtained from a model identifier management network element.

It should be noted that this embodiment is an implementation that is specific to the FL server node and that corresponds to the embodiment shown in FIG. 2. For a specific implementation of this embodiment, refer to related descriptions of the embodiment shown in FIG. 2. To avoid repetition, details are not described in this embodiment again.

The method provided in the embodiments of this application is described below with a plurality of embodiments by using an example in which the model training function node is an MTLF, the model inference function node is an AnLF, the FL server node is an FL server, and the FL client node is an FL client.

### Embodiment 1:

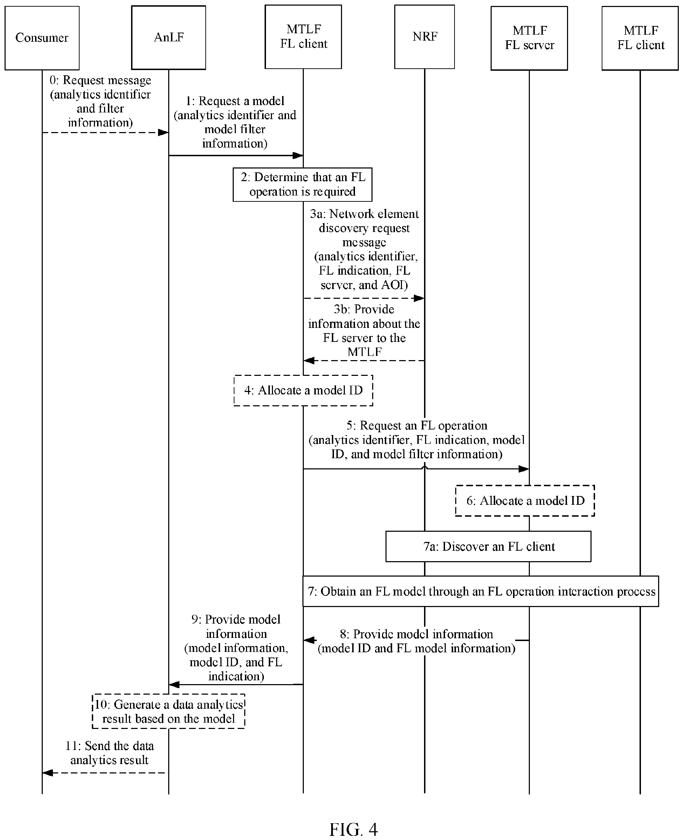

In this embodiment, an example in which an FL server determines an FL client is used for description. Specifically, as shown in FIG. 4, the following steps are included.

Step 0: Optionally, a consumer network function (Consumer NF) requests a data analytics result from an AnLF, where a request message may carry at least one of the following:
an analytics identifier (Analytics ID), used to identify a task type of a data analytics task, where for example, analytics ID = UE mobility is used to indicate a request for a user moving trajectory data analytics task;
analytic filter information (Analytic filter information), used to indicate data analytics result filter information, for example, including an area of interest (AOI), slice S-NSSAI, a DNN, or the like;
a target of analytic reporting (Target of analytic reporting), used to indicate whether a target of data analytics is a specific terminal, a plurality of terminals, or all UEs; and
analytics reporting information (Analytics reporting information), used to indicate reporting time or a reporting condition of a data analytics result, or other information.

Step 1: The AnLF sends a model request message to an MTLF1 to request a model corresponding to the analytics identifier.

The model request message may be a model provision subscription (Nnwdaf_MLModelProvision_subscribe) message or a model information request message (Nnwdaf_MLModelInfo_Request).

The model request message may carry the following information:
an Analytic ID, used to identify an inference task type, where for example, analytics ID = UE mobility is used to predict a user moving trajectory;
model filter information, used to indicate a condition that the requested model needs to meet, for example, an area of interest (AOI), slice S-NSSAI, or a DNN;
model target information, used to indicate a training target of the model, for example, a single terminal, a plurality of terminals, or any terminal; and
model time information, used to indicate applicable time of the model or reporting time of model information.

It should be noted that the MTLF1 herein is not an FL server. Specifically, the MTLF 1 is not an FL server for the target model, but may be an FL server for another model. The FL server may be referred to as a coordinator (coordinator), or a central MTLF for an FL operation (central MTLF for FL operation). The MTLF1 is only an FL client (or referred to as a member that participates in an FL operation) or an MTLF that does not support an FL capability.

Step 2: The MTLF1 determines, based on the model request message, that federated learning needs to be performed to obtain the requested model.

A factor based on which the MTLF1 determines that federated learning needs to be performed may include:

The MTLF1 does not have sufficient training data for the model training task. For example, centralized model training cannot be performed to generate the requested model because some training data in other areas or other training entities is absent due to data privacy issues.

Optionally, the MTLF1 may further determine that a federated learning type is horizontal federated learning. For example, the MTLF1 determines a need of horizontal federated learning based on that the training task conforms to a characteristic that training data corresponds to different samples but has a same feature.

Step 3a: Optionally, the MTLF1 sends a node discovery request message to an NRF to request a network element device that can perform federated learning training.

Specifically, the node discovery request message may be a discovery request (Nnrf_NFDiscovery _Request).The message may include:
an analytics identifier (analytics ID), used to indicate that the requested network element needs to support the analytics ID; and
an AOI, which may be at least one tracking area (Tracking Area, TA), at least one cell (cell), or other representation forms, and is used to indicate that the requested network element needs to be able to serve the AOI.

The node discovery request message may further include at least one of the following information:
federated learning indication information, used to indicate that the requested network element needs to be able to support federated learning, and further indicate that horizontal federated learning needs to be supported;
an expected NF type being an FL server (Expected NF type = FL server), used to indicate that the requested network element needs to belong to an FL server type;
an expected NF type being an FL client (Expected NF type = FL client), used to indicate that the requested network element needs to belong to an FL client type;
an expected NF service name being an FL server (coordination) service (Expected NF service Name = FL server (coordination) service), used to indicate that the requested network element needs to support a service of a federated learning server (coordination); and
an expected NF service name being an FL client (participant) service (Expected NF service Name = FL client (participant) service), used to indicate that the requested network element needs to support a service of a federated learning member (participant).

In an implementation, a network element request message includes federated learning indication information, where the request message may specify an analytics identifier, an expected NF type being an MTLF (Expected NF type = MTLF), and an AOI. In this case, the MTLF1 is configured to request, from the NRF, all MTLFs that support federated learning for the AOI.

In an implementation, a network element request message includes an expected NF type being an FL server (Expected NF type = FL server), and others are similar to those in the related art (for example, an analytics ID, Expected NF type = MTLF, and an AOI are specified). This indicates that the MTLF1 is configured to request, from the NRF, an FL server that supports federated learning.

In an implementation, a network element request message includes Expected NF type = FL server and FL client, and others are similar to those in the related art (for example, an analytics ID, Expected NF type = MTLF, and an AOI are specified). This indicates that the MTLF1 is configured to request, from the NRF, an FL server and an FL client that support federated learning.

Step 3b: The NRF returns, to the MTLF 1, device information that conforms to the network element initiation request message in step 3a.

The NRF sends FQDNs, identification information, address information, and the like of one or more MTLFs that meet a requirement to the MTLF 1, and feedback information may indicate whether each MTLF is an FL server or an FL client.

Step 4: Optionally, the MTLF1 allocates a model identifier (model ID) to a to-be-generated federated learning model to uniquely identify the model.

Step 5: The MTLF1 sends a federated learning request message to an FL server to request the FL server to trigger a federated learning process. The federated learning request message may include at least one of the following information:
a federated learning indication (FL indication), used to indicate a request for a federated learning process;
an analytics identifier (Analytics ID), used to indicate a request for a federated learning process for a task type identified by the analytics ID;
a model identifier (Model ID), used to uniquely identify a model generated through federated learning;
model filter information (Model filter information), used to limit a range of a federated learning process, for example, an area range, a time range, S-NSSAI, or a DNN;
a model target (Model target of model), used to specify a target of a federated learning process, for example, specific one or more terminals, or all terminals; and
model reporting information (Model reporting information), used to indicate reporting information of generated federated learning model information, for example, reporting time (start time, end time, or the like) or a reporting condition (being periodically triggered, being triggered by an event, or the like).

Step 6: Optionally, if no model identifier is received from the MTLF1, the FL server may allocate a model identifier to a to-be-generated federated learning model to uniquely identify the model.

Step 7a: The FL server determines at least one FL client for the federated learning process. Specifically, the FL server may obtain, from a network repository function network element through querying, an FL client that conforms to the federated learning process. Refer to step 3a.

It should be noted that the FL client herein may or may not include the MTLF1.

Step 7: The FL server performs an interactive iteration process of federated learning with the FL client to obtain a federated learning model.

If the FL client does not include the MTLF1, the interaction process herein does not involve the MTLF1.

Step 8: The FL server sends target model information of the generated federated learning model to the MTLF1, where the target model information includes at least one of the following:
a model identifier;
a federated learning indication;
a model file (including a network structure, a weight parameter, input/output data, and the like of the model);
download address information or storage address information of the model file (used to indicate a storage address of the model file or a location from which the model file can be downloaded);
an analytics identifier (indicating that the model is applicable to a specific inference task type);
model filter information (used to limit a range of a federated learning process, for example, an area range, a time range, S-NSSAI, or a DNN);
area-of-validity information (an applicable area of the model); and
time-of-validity information (applicable time of the model).

Step 9: The MTLF1 sends the model information of the generated federated learning model to the AnLF.

In this step, the MTLF1 may send the model by using a model provision notification (Nnwdaf_MLModelProvision_Notify) or model information response (Nnwdaf_MLModelInfo_Response) message. For details about sent content, refer to step 8.

Step 10: The AnLF generates a data analytics result based on the model.

Step 11: Optionally, the AnLF sends the data analytics result to the consumer NF.

### Embodiment 2:

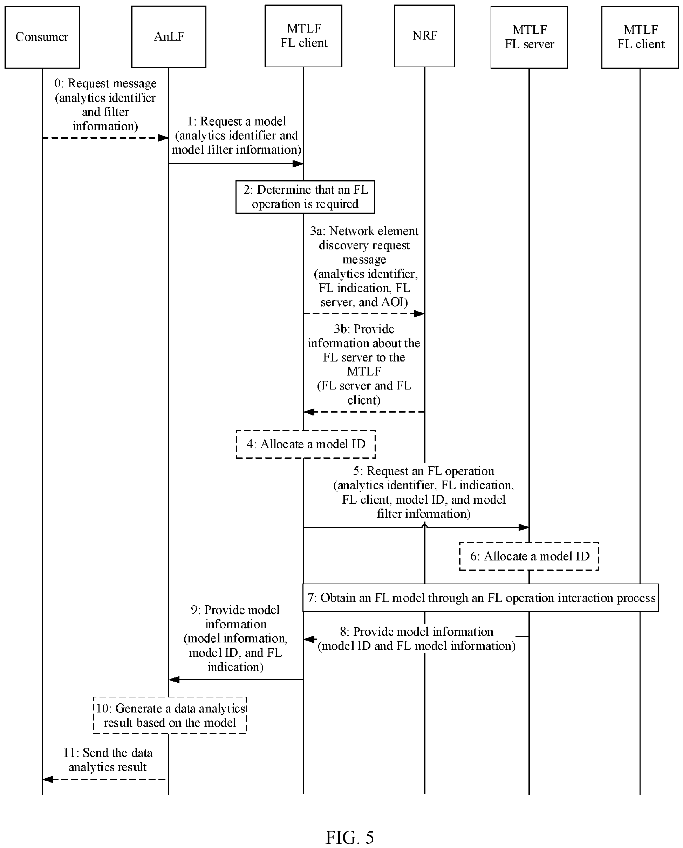

In this embodiment, an example in which an MTLF 1 determines an FL client is used for description. Specifically, as shown in FIG. 5, a difference from Embodiment 1 lies in:
in step 3, the MTLF1 obtains an FL server and an FL client from the NRF; and
in step 5, optionally, the MTLF1 also indicates an FL client that participates in current federated learning to the FL server. A step of querying, by the FL server, an FL client from the NRF can be omitted.

In the embodiments of this application, when federated learning needs to be performed to generate a model due to data privacy issues, even if the model training function node does not support a federated learning capability or a federated learning server capability or does not support federated learning or a federated learning server capability for a specific analytics identifier or a specific AOI, the model training function node can still trigger other devices to perform federated learning to obtain a model required by the model training function node. This expands an application scope of federated learning, and therefore addresses data privacy issues in a wider range.

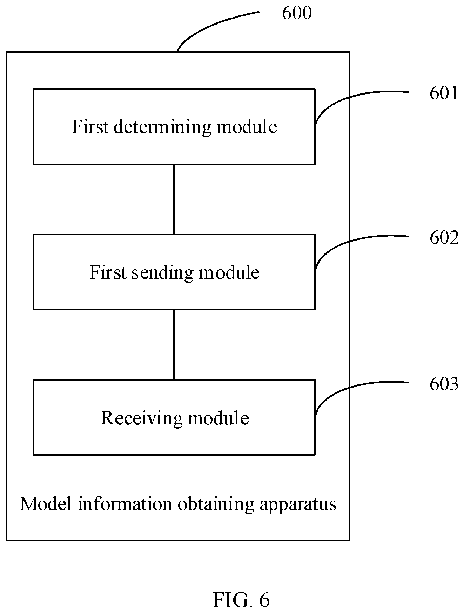

FIG. 6 is a structural diagram of a model information obtaining apparatus according to an embodiment of this application. As shown in FIG. 6, the model information obtaining apparatus 600 includes:
a first determining module 601, configured to determine a federated learning FL server node;
a first sending module 602, configured to send a first request message to the FL server node, where the first request message is used to trigger the FL server node to perform federated learning to obtain a target model; and
a receiving module 603, configured to receive information about the target model that is sent by the FL server node.

Optionally, the first determining module 601 is configured to: send a node discovery request message to a network repository function network element, where the node discovery request message is used to request a network node that participates in federated learning training; and receive a response message sent by the network repository function network element, where the response message includes information about the FL server node.

Optionally, the node discovery request message includes at least one of the following:
an analytics identifier, area of interest AOI information, time of interest information, model description mode information, model shareability information, model performance information, model algorithm information, model training speed information, federated learning indication information, federated learning type information, FL server node type indication information, FL client node type indication information, first service information, and second service information, where
the federated learning indication information is used to indicate that the network node requested by the request message needs to support federated learning;
the first service information is used to indicate that the network node requested by the request message needs to support a service of a federated learning server; and
the second service information is used to indicate that the network node requested by the request message needs to support a service of a federated learning member.

Optionally, the federated learning type information is used to indicate that a federated learning type that the network node requested by the request message needs to support is at least one of the following:
a horizontal federated learning type; and
a vertical federated learning type.

Optionally, the response message includes information about N network nodes, the N network nodes include the FL server node, and N is a positive integer.

Information about each network node includes at least one of the following:
a fully qualified domain name FQDN, identification information, and address information.

Optionally, the N network nodes further include an FL client node.

Optionally, the information about each network node further includes:
type information, where the type information is used to indicate a type of a network node, and the type is one of an FL server node and an FL client node.

Optionally, the first request message includes at least one of the following:
federated learning indication information and a model identifier, where
the federated learning indication information is used to request the FL server node to trigger federated learning to obtain the target model; and
the model identifier is used to uniquely identify the target model.

Optionally, the model information obtaining apparatus 600 further includes:
an obtaining module, configured to obtain the model identifier.

Optionally, the first request message includes information about an FL client node that participates in federated learning.

Optionally, the information about the target model includes at least one of the following information corresponding to the target model:
a model identifier, federated indication information, a model file, and address information of the model file, where
the federated learning indication information is used to indicate that the target model is a model obtained through federated learning; and
the model identifier is used to uniquely identify the target model.

Optionally, the model information obtaining apparatus 600 further includes:
a second sending module, configured to send the information about the target model to a model inference function node.

Optionally, the model information obtaining apparatus 600 further includes:
a second determining module, configured to determine that federated learning needs to be performed to obtain the target model.

Optionally, the second determining module is configured to: in a case that the model training function node determines that all or some of training data for generating the target model is unable to be obtained, determine that federated learning needs to be performed to obtain the target model.

The model information obtaining apparatus can improve model training performance of a network node.

The model information obtaining apparatus in this embodiment of this application may be an electronic device, for example, an electronic device with an operating system; or may be a component in an electronic device, for example, an integrated circuit or a chip. The electronic device may be a core network device, a network-side device, a terminal, or a device other than the terminal.

The model information obtaining apparatus provided in this embodiment of this application is capable of implementing the processes implemented in the method embodiment shown in FIG. 2, with the same technical effects achieved. To avoid repetition, details are not described herein again.

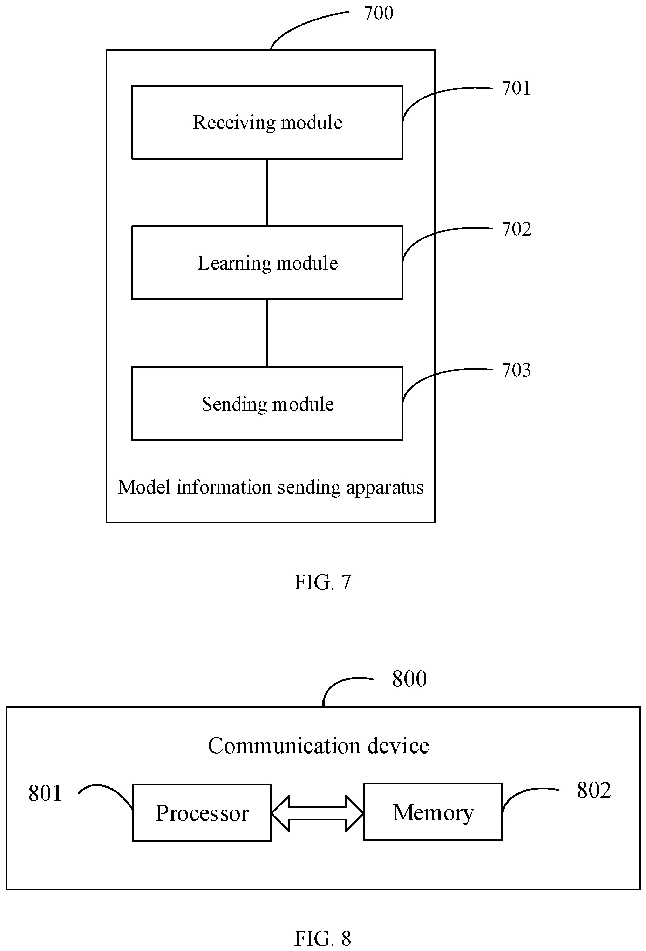

FIG. 7 is a structural diagram of a model information sending apparatus according to an embodiment of this application. As shown in FIG. 7, the model information sending apparatus 700 includes:
a receiving module 701, configured to receive a first request message sent by a model training function node, where the first request message is used to trigger a federated learning FL server node to perform federated learning to obtain a target model;
a learning module 702, configured to perform federated learning with an FL client node based on the first request message to obtain the target model; and
a sending module 703, configured to send information about the target model to the model training function node.

Optionally, the first request message includes at least one of the following:
federated learning indication information and a model identifier, where
the federated learning indication information is used to request the FL server node to trigger federated learning to obtain the target model; and
the model identifier is used to uniquely identify the target model.

Optionally, the first request message includes information about an FL client node that participates in federated learning.

Optionally, the model information sending apparatus 700 further includes:
a determining module, configured to determine an FL client node that participates in federated learning.

Optionally, the determining module is configured to: send a node discovery request message to a network repository function network element, where the node discovery request message is used to request an FL client node that participates in federated learning; and receive a response message sent by the network repository function network element, where the response message includes information about an FL client node that participates in federated learning.

Optionally, the information about the federated model includes at least one of the following information corresponding to the target model:
a model identifier, federated indication information, a model file, and address information of the model file, where
the federated learning indication information is used to indicate that the target model is a model obtained through federated learning; and
the model identifier is used to uniquely identify the target model.

Optionally, the model identifier is obtained by the model training function node for the target model.

Optionally, the model information sending apparatus 700 further includes:
an obtaining module, configured to obtain the model identifier for the target model.

The model information sending apparatus can improve model training performance of a network node.

The model information sending apparatus in this embodiment of this application may be an electronic device, for example, an electronic device with an operating system; or may be a component in an electronic device, for example, an integrated circuit or a chip. The electronic device may be a core network device, a network-side device, a terminal, or a device other than the terminal.

The model information sending apparatus provided in this embodiment of this application is capable of implementing the processes implemented in the method embodiment shown in FIG. 3, with the same technical effects achieved. To avoid repetition, details are not described herein again.

Optionally, as shown in FIG. 8, an embodiment of this application further provides a communication device 800, including a processor 801 and a memory 802. The memory 802 stores a program or instructions capable of running on the processor 801. For example, in a case that the communication device 800 is a first control network element, when the program or instructions are executed by the processor 801, the steps in the foregoing embodiments of the model information obtaining method or the model information sending method are implemented, with the same technical effects achieved. To avoid repetition, details are not described herein again.

An embodiment of this application further provides a model training function node, including a processor and a communication interface. The processor or the communication interface is configured to determine an FL server node. The communication interface is configured to: send a first request message to the FL server node, where the first request message is used to trigger the FL server node to perform federated learning to obtain a target model; and receive information about the target model that is sent by the FL server node.

An embodiment of this application further provides a server node, including a processor and a communication interface. The communication interface is configured to receive a first request message sent by a model training function node, where the first request message is used to trigger a federated learning FL server node to perform federated learning to obtain a target model. The processor or the communication interface is configured to perform federated learning with an FL client node based on the first request message to obtain the target model. The communication interface is configured to send information about the target model to the model training function node.

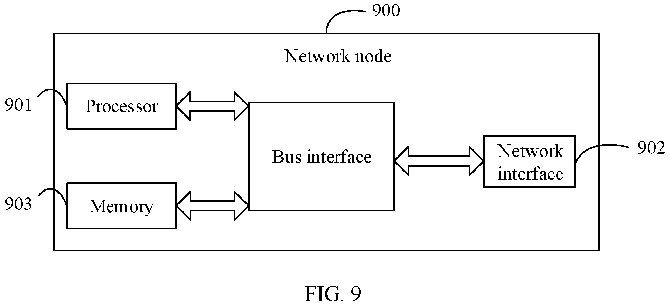

Specifically, an embodiment of this application further provides a network node. As shown in FIG. 9, the network node 900 includes a processor 901, a network interface 902, and a memory 903. The network interface 902 is, for example, a common public radio interface (common public radio interface, CPRI).

Specifically, the network node 900 in this embodiment of this application further includes instructions or a program stored in the memory 903 and capable of running on the processor 901, and the processor 901 invokes the instructions or program in the memory 903 to perform the method performed by the modules shown in FIG. 6 or FIG. 7, with the same technical effects achieved. To avoid repetition, details are not described herein again.

In an embodiment in which the network node is a model training function node:
the processor 901 or the network interface 902 is configured to determine a federated learning FL server node; and
the network interface 902 is configured to: send a first request message to the FL server node, where the first request message is used to trigger the FL server node to perform federated learning to obtain a target model; and receive information about the target model that is sent by the FL server node.

Optionally, the determining an FL server node includes:
sending a node discovery request message to a network repository function network element, where the node discovery request message is used to request a network node that participates in federated learning training; and
receiving a response message sent by the network repository function network element, where the response message includes information about the FL server node.

Optionally, the node discovery request message includes at least one of the following:
an analytics identifier, area of interest AOI information, time of interest information, model description mode information, model shareability information, model performance information, model algorithm information, model training speed information, federated learning indication information, federated learning type information, FL server node type indication information, FL client node type indication information, first service information, and second service information, where
the federated learning indication information is used to indicate that the network node requested by the request message needs to support federated learning;
the first service information is used to indicate that the network node requested by the request message needs to support a service of a federated learning server; and
the second service information is used to indicate that the network node requested by the request message needs to support a service of a federated learning member.

Optionally, the federated learning type information is used to indicate that a federated learning type that the network node requested by the request message needs to support is at least one of the following:
a horizontal federated learning type; and
a vertical federated learning type.

Optionally, the response message includes information about N network nodes, the N network nodes include the FL server node, and N is a positive integer.

Information about each network node includes at least one of the following:
a fully qualified domain name FQDN, identification information, and address information.

Optionally, the N network nodes further include an FL client node.

Optionally, the information about each network node further includes:
type information, where the type information is used to indicate a type of a network node, and the type is one of an FL server node and an FL client node.

Optionally, the first request message includes at least one of the following:
federated learning indication information and a model identifier, where
the federated learning indication information is used to request the FL server node to trigger federated learning to obtain the target model; and
the model identifier is used to uniquely identify the target model.

Optionally, the processor 901 or the network interface 902 is further configured to:
obtain the model identifier.

Optionally, the first request message includes information about an FL client node that participates in federated learning.

Optionally, the information about the target model includes at least one of the following information corresponding to the target model:
a model identifier, federated indication information, a model file, and address information of the model file, where
the federated learning indication information is used to indicate that the target model is a model obtained through federated learning; and
the model identifier is used to uniquely identify the target model.

Optionally, the network interface 902 is further configured to:
send, for the model training function node, the information about the target model to the model inference function node.

Optionally, before the model training function node determines the FL server node, the processor 901 is further configured to:
determine that federated learning needs to be performed to obtain the target model.

Optionally, a method for determining that federated learning needs to be performed to obtain the target model includes:
in a case that the model training function node determines that all or some of training data for generating the target model is unable to be obtained, determining that federated learning needs to be performed to obtain the target model.

In an embodiment in which the network node is an FL server node:
the network interface 902 is configured to: receive a first request message sent by a model training function node, where the first request message is used to trigger the FL server node to perform federated learning to obtain a target model; perform federated learning with an FL client node based on the first request message to obtain the target model; and send information about the target model to the model training function node.

Optionally, the first request message includes at least one of the following:
federated learning indication information and a model identifier, where
the federated learning indication information is used to request the FL server node to trigger federated learning to obtain the target model; and
the model identifier is used to uniquely identify the target model.

Optionally, the first request message includes information about an FL client node that participates in federated learning.

Optionally, the processor 901 or the network interface 902 is further configured to:
determine an FL client node that participates in federated learning.

Optionally, the determining an FL client node that participates in federated learning includes:
sending a node discovery request message to a network repository function network element, where the node discovery request message is used to request an FL client node that participates in federated learning; and
receiving a response message sent by the network repository function network element, where the response message includes information about an FL client node that participates in federated learning.

Optionally, the information about the federated model includes at least one of the following information corresponding to the target model:
a model identifier, federated indication information, a model file, and address information of the model file, where
the federated learning indication information is used to indicate that the target model is a model obtained through federated learning; and
the model identifier is used to uniquely identify the target model.

Optionally, the model identifier is obtained by the model training function node for the target model.

Optionally, the processor 901 is further configured to:
obtain the model identifier for the target model.

It should be noted that, in this embodiment, an example in which the model training function node and the FL server node are core-network network elements is used for description.

An embodiment of this application further provides a readable storage medium, where the readable storage medium stores a program or instructions, and when the program or instructions are executed by a processor, the steps of the model information obtaining method provided in the embodiments of this application are implemented, or the steps of the model information sending method provided in the embodiments of this application are implemented.

The processor is a processor in the terminal in the foregoing embodiments. The readable storage medium includes a computer-readable storage medium, for example, a computer read-only memory ROM, a random access memory RAM, a magnetic disk, or an optical disc.

An embodiment of this application further provides a chip, where the chip includes a processor and a communication interface, the communication interface is coupled to the processor, and the processor is configured to run a program or instructions, to implement the processes in the foregoing embodiments of the model information obtaining method or the model information sending method, with the same technical effects achieved. To avoid repetition, details are not described herein again.

It should be understood that the chip provided in this embodiment of this application may also be referred to as a system-level chip, a system on chip, a chip system, a system-on-a-chip, or the like.

An embodiment of this application further provides a computer program or program product, where the computer program or program product is stored in a storage medium, and the computer program or program product is executed by at least one processor to implement the processes in the foregoing embodiments of the model information obtaining method or the model information sending method, with the same technical effects achieved. To avoid repetition, details are not described herein again.

An embodiment of this application further provides a model information transmission system, including a model training function node and a server node, where the model training function node may be configured to perform the steps of the model information obtaining method provided in the embodiments of this application, and the server node may be configured to perform the steps of the model information sending method provided in the embodiments of this application.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and apparatus in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples can be combined in other examples.

According to the foregoing descriptions of the implementations, a person skilled in the art can clearly understand that the methods in the foregoing embodiments may be implemented by using software in combination with a necessary common hardware platform, or certainly may be implemented by using hardware. However, in most cases, the former is a preferred implementation. Based on such an understanding, the technical solutions of this application essentially or the part contributing to the related art may be implemented in a form of a computer software product. The computer software product may be stored in a storage medium (for example, a ROM/RAM, a magnetic disk, or a compact disc), and includes several instructions for instructing a terminal (which may be a mobile phone, a computer, a server, an air conditioner, a network device, or the like) to perform the methods in the embodiments of this application.

The foregoing describes the embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

## Claims

1. A model information obtaining method, comprising:
determining, by a model training function node, a federated learning FL server node;
sending, by the model training function node, a first request message to the FL server node, wherein the first request message is used to trigger the FL server node to perform federated learning to obtain a target model; and
receiving, by the model training function node, information about the target model that is sent by the FL server node.

2. The method according to claim 1, wherein the determining, by a model training function node, an FL server node comprises:
sending, by the model training function node, a node discovery request message to a network repository function network element, wherein the node discovery request message is used to request a network node that participates in federated learning training; and
receiving, by the model training function node, a response message sent by the network repository function network element, wherein the response message comprises information about the FL server node.

3. The method according to claim 2, wherein the node discovery request message comprises at least one of the following:
an analytics identifier, area of interest AOI information, time of interest information, model description mode information, model shareability information, model performance information, model algorithm information, model training speed information, federated learning indication information, federated learning type information, FL server node type indication information, FL client node type indication information, first service information, and second service information, wherein
the federated learning indication information is used to indicate that the network node requested by the request message needs to support federated learning;
the first service information is used to indicate that the network node requested by the request message needs to support a service of a federated learning server; and
the second service information is used to indicate that the network node requested by the request message needs to support a service of a federated learning member.

4. The method according to claim 3, wherein the federated learning type information is used to indicate that a federated learning type that the network node requested by the request message needs to support is at least one of the following:
a horizontal federated learning type; and
a vertical federated learning type.

5. The method according to claim 2, wherein the response message comprises information about N network nodes, the N network nodes comprise the FL server node, and N is a positive integer; and
information about each network node comprises at least one of the following:
a fully qualified domain name FQDN, identification information, and address information.

6. The method according to claim 5, wherein the N network nodes further comprise an FL client node.

7. The method according to claim 5 or 6, wherein the information about each network node further comprises:
type information, wherein the type information is used to indicate a type of a network node, and the type is one of an FL server node and an FL client node.

8. The method according to any one of claims 1 to 6, wherein the first request message comprises at least one of the following:
federated learning indication information and a model identifier, wherein
the federated learning indication information is used to request the FL server node to trigger federated learning to obtain the target model; and
the model identifier is used to uniquely identify the target model.

9. The method according to claim 8, wherein the method further comprises:
obtaining, by the model training function node, the model identifier.

10. The method according to any one of claims 1 to 6, wherein the first request message comprises information about an FL client node that participates in federated learning.

11. The method according to any one of claims 1 to 6, wherein the information about the target model comprises at least one of the following information corresponding to the target model:
a model identifier, federated indication information, a model file, and address information of the model file, wherein
the federated learning indication information is used to indicate that the target model is a model obtained through federated learning; and
the model identifier is used to uniquely identify the target model.

12. The method according to any one of claims 1 to 6, wherein the method further comprises:
sending, by the model training function node, the information about the target model to a model inference function node.

13. The method according to any one of claims 1 to 6, wherein before the determining, by a model training function node, an FL server node, the method further comprises:
determining, by the model training function node, that federated learning needs to be performed to obtain the target model.

14. The method according to claim 13, wherein the determining, by the model training function node, that federated learning needs to be performed to obtain the target model comprises:
in a case that the model training function node determines that all or some of training data for generating the target model is unable to be obtained, determining, by the model training function node, that federated learning needs to be performed to obtain the target model.

15. A model information sending method, comprising:
receiving, by a federated learning FL server node, a first request message sent by a model training function node, wherein the first request message is used to trigger the FL server node to perform federated learning to obtain a target model;
performing, by the FL server node, federated learning with an FL client node based on the first request message to obtain the target model; and
sending, by the FL server node, information about the target model to the model training function node.

16. The method according to claim 15, wherein the first request message comprises at least one of the following:
federated learning indication information and a model identifier, wherein
the federated learning indication information is used to request the FL server node to trigger federated learning to obtain the target model; and
the model identifier is used to uniquely identify the target model.

17. The method according to claim 15 or 16, wherein the first request message comprises information about an FL client node that participates in federated learning.

18. The method according to claim 15 or 16, wherein the method further comprises:
determining, by the FL server node, an FL client node that participates in federated learning.

19. The method according to claim 18, wherein the determining, by the FL server node, an FL client node that participates in federated learning comprises:
sending, by the FL server node, a node discovery request message to a network repository function network element, wherein the node discovery request message is used to request an FL client node that participates in federated learning; and
receiving, by the FL server node, a response message sent by the network repository function network element, wherein the response message comprises information about an FL client node that participates in federated learning.

20. The method according to claim 15 or 16, wherein the information about the federated model comprises at least one of the following information corresponding to the target model:
a model identifier, federated indication information, a model file, and address information of the model file, wherein
the federated learning indication information is used to indicate that the target model is a model obtained through federated learning; and
the model identifier is used to uniquely identify the target model.

21. The method according to claim 16, wherein the model identifier is obtained by the model training function node for the target model.

22. The method according to claim 20, wherein the method further comprises:
obtaining, by the FL server node, the model identifier for the target model.

23. A model information obtaining apparatus, comprising:
a first determining module, configured to determine a federated learning FL server node;
a first sending module, configured to send a first request message to the FL server node, wherein the first request message is used to trigger the FL server node to perform federated learning to obtain a target model; and
a receiving module, configured to receive information about the target model that is sent by the FL server node.

24. A model information sending apparatus, comprising:
a receiving module, configured to receive a first request message sent by a model training function node, wherein the first request message is used to trigger a federated learning FL server node to perform federated learning to obtain a target model;
a learning module, configured to perform federated learning with an FL client node based on the first request message to obtain the target model; and
a sending module, configured to send information about the target model to the model training function node.

25. A model training function node, comprising a processor and a memory, wherein the memory stores a program or instructions capable of running on the processor, and when the program or instructions are executed by the processor, the steps of the model information obtaining method according to any one of claims 1 to 14 are implemented.

26. A server node, comprising a processor and a memory, wherein the memory stores a program or instructions capable of running on the processor, and when the program or instructions are executed by the processor, the steps of the model information sending method according to any one of claims 15 to 22 are implemented.

27. A readable storage medium, wherein the readable storage medium stores a program or instructions, and when the program or instructions are executed by a processor, the steps of the model information obtaining method according to any one of claims 1 to 14 are implemented, or the steps of the model information sending method according to any one of claims 15 to 22 are implemented.
